# EUROPÄISCHE PATENTSCHRIFT

(11) **EP 3 452 834 B1**
(45) Veröffentlichungstag und Bekanntmachung des Hinweises auf die Patenterteilung: **20.01.2021**
(21) Anmeldenummer: 17740750.9
(22) Anmeldetag: 19.07.2017
(51) Int. Cl.: G01N 35/10, B01L 3/02, G01F 23/26, G01N 35/00, B01L 3/00, G01D 5/241

(54) **FLÜSSIGKEITSBEARBEITUNGSSYSTEM UMFASSEND EINE PIPETTIERVORRICHTUNG MIT EINER PIPETTENSPITZENERKENNUNGS-EINHEIT UND VERFAHREN ZUM ERKENNEN EINER PIPETTENSPITZE AN EINER PIPETTIERVORRICHTUNG**
LIQUID PROCESSING SYSTEM COMPRISING A PIPETTING DEVICE HAVING A PIPETTE TIP DETECTION UNIT AND METHOD FOR DETECTING A PIPETTE TIP ON A PIPETTING DEVICE
SYSTÈME DE TRAITEMENT DE LIQUIDES COMPRENANT UN DISPOSITIF DE PIPETAGE COMPRENANT UNE UNITÉ DE DÉTECTION DE POINTE DE PIPETTE ET PROCÉDÉ PERMETTANT DE DÉTECTER UNE POINTE DE PIPETTE SUR UN DISPOSITIF DE PIPETAGE

(30) Priorität: 22.07.2016 CH 9502016; 10.02.2017 CH 1592017
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg (CH); GEIGES, Thomas, 8706 Männerdorf (DE)
(74) Vertreter: Troesch Scheidegger Werner AG
(86) Internationale Anmeldenummer: PCT/EP2017/068208
(87) Internationale Veröffentlichungsnummer: WO 2018/015422

(56) Entgegenhaltungen:
- JP-A- H10 123 149
- US-A- 4 714 874
- US-A1- 2002 001 545
- US-A1- 2007 068 806
- US-A1- 2015 114 123
- US-B1- 6 551 558

## Beschreibung

### VERWANDTE ANMELDUNG

Die vorliegende Anmeldung beansprucht die Priorität der Schweizer Patentanmeldung CH 00950/16 mit Anmeldetag 22. Juli 2016.

### TECHNISCHES GEBIET DER ERFINDUNG

Die vorliegende Erfindung bezieht sich auf das technische Gebiet der Flüssigkeitsbearbeitungssysteme und betrifft insbesondere Pipettiervorrichtungen mit auswechselbaren Pipettenspitzen zum Ansaugen (bzw. Aufnehmen/Aspirieren) und Abgeben (bzw. Zuführen/Dispensieren) von Flüssigkeitsvolumina für den Einsatz in automatisierten Laborgeräten bzw. -anlagen. Es wird ein Flüssigkeitsbearbeitungssystem umfassend eine Pipettiervorrichtung mit einer Pipettenspitzenerkennungseinheit sowie ein Verfahren zur Erkennung einer Pipettenspitze an einer solchen Pipettiervorrichtung angegeben.

### HINTERGRUND DER ERFINDUNG

Wenn in medizinischen, chemischen, analytischen oder pharmazeutischen Labors grosse Mengen an Proben zu untersuchen sind, werden dazu heutzutage meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt, und dazu geeignet mit diesen Proben bestimmte Vorgänge auszuführen, wie beispielsweise optische Messungen, Pipettierungen, Waschen, Zentrifugieren, Inkubieren und Filtrieren. Dabei werden üblicherweise ein oder mehrere Roboter(-arme) für den vollautomatischen Betrieb solcher Laborsysteme eingesetzt. Diese Roboter sind insbesondere auf den Umgang mit Flüssigkeitsbehältern, wie beispielsweise Probenröhren oder Mikroplatten, in welchen sich die Flüssigkeitsproben befinden, spezialisiert. Solche Flüssigkeitsbearbeitungssysteme umfassen insbesondere Pipettierer zum Ansaugen und Abgeben von Flüssigkeiten oder Dispenser ausschliesslich zum Abgeben von Flüssigkeiten.

Bei vielen Anwendungen wird für die Handhabung jeder neuen Probe eine frische Pipettenspitze verwendet. Solche Pipettenspitzen sind daher für den einmaligen Gebrauch ausgelegt und werden meist als "Wegwerf-Pipettenspitzen" oder Englisch als "disposable tips" bezeichnet. Je nach Anwendung werden beim Pipettieren sehr unterschiedliche Flüssigkeitsvolumina gehandhabt. Dazu werden meist Pipettenspitzen verschiedener Grössen bzw. mit unterschiedlichem Fassungsvolumen eingesetzt. Je nach dem was für Flüssigkeiten/Proben gehandhabt werden, bestehen unterschiedliche Anforderungen beispielsweise an die Grösse der Öffnung, durch welche die Flüssigkeit/Probe aufgenommen bzw. abgegeben wird, und an den Reinheitsgrad (z.B. Sterilität) der verwendeten Pipettenspitzen. Zudem muss bei vielen Anwendungen sichergestellt werden, dass die einzelnen Proben die Pipettiervorrichtung nicht kontaminieren. Dazu ist im oberen Teil der Pipettenspitze, welcher an die Pipettenröhre angeschlossen wird, ein Filter eingebaut bzw. integriert, welches verhindert, dass die Probe in die Pipettenröhre eindringt und daraufhin von dort aus in nachfolgende Proben abgegeben wird. Je nach Art der Probe werden dafür unterschiedliche Filter eingesetzt. Es ist nun wichtig, dass bei einer automatisierten Pipettiervorrichtung, diese in der Lage ist zu erkennen, ob überhaupt eine Pipettenspitze an der Pipettenröhre angeschlossen ist, und insbesondere ob die korrekte Pipettenspitze an die Pipettenröhre angeschlossen ist. Bisher wurden zur Lösung des zuletzt genannten Problems entweder die Pipettenspitzen oder die Pipettenspitzenhalterungen, in welchen die Pipettenspitzen bereitgestellt werden, mit einem Code oder einer Identifikation versehen, welche optisch gelesen wird. Alternativ wurden die verschiedenen Pipettenspitzen aufgrund eines besonderen geometrischen Merkmals unterschieden, wie z.B. verschieden lange Anschlüsse am oberen Teil der Pipettenspitze für das Anschliessen an die Pipettenröhre.

Es besteht daher der Bedarf nach Mitteln, welche eine einfache und folglich kostengünstige sowie zuverlässige Erkennung verschiedener Pipettenspitzen erlauben. Die Pipettenspitzenerkennung sollte zudem den Trend hin zur höheren räumlichen Verdichtung der einzelnen Komponenten in der Pipettiervorrichtung sowie zu einer zeitlichen Verkürzung der Pipettiervorgänge nicht behindern.

US6551558 und JPH10123149 offenbaren eine Pipettiervorrichtung mit einer Kapazitätsmesseinheit.

### ZUSAMMENFASSUNG DER ERFINDUNG

Es ist eine Aufgabe der vorliegenden Erfindung eine Pipettiervorrichtung bereitzustellen, welche in der Lage ist automatisch verschiedene Pipettenspitzen zu erkennen. Diese Aufgabe wird erfindungsgemäss durch das in Anspruch 1 festgelegte Flüssigkeitsbearbeitungssystem mit einer Pipettiervorrichtung erfüllt.

Es ist eine weitere Aufgabe der vorliegenden Erfindung ein Verfahren bereitzustellen, welches die Erkennung einer Pipettenspitze an einer Pipettiervorrichtung ermöglicht. Diese Aufgabe wird erfindungsgemäss durch das in Anspruch 5 vorgeschlagene Verfahren gelöst.

Spezifische erfindungsgemässe Ausführungsvarianten werden in den abhängigen Ansprüchen angegeben.

Ein erfindungsgemässes Flüssigkeitsbearbeitungssystem umfasst eine Pipettiervorrichtung mit:
- einer Pipettenröhre, die an ihrem einen Ende zum lösbaren Aufnehmen einer Pipettenspitze zum Aspirieren bzw. Dispensieren einer Flüssigkeit ausgebildet ist, und die an ihrem anderen Ende mit einem Druckerzeugungsmittel wirkverbindbar ist;
- einer Kapazitätsmesseinheit zur Messung einer Kapazität, insbesondere einer absoluten Kapazität, eines Messkondensators, welcher eine erste Elektrode und eine zweite Elektrode als Gegenelektrode umfasst, wobei die zweite Elektrode Bestandteil des Flüssigkeitsbearbeitungssystems ist; und
- einer Detektionseinheit zur Erkennung ob eine Pipettenspitze mit dem einen Ende der Pipettenröhre verbunden ist, und/oder zur Erkennung eines charakteristischen Merkmals der Pipettenspitze, welche mit dem einen Ende der Pipettenröhre verbunden ist,
wobei die Pipettenspitze zumindest einen Teil der ersten Elektrode bildet, wenn die Pipettenspitze in elektrischer (kapazitiver) Wirkverbindung mit der Pipettenröhre steht, und wobei die Detektionseinheit derart ausgebildet ist, dass die Erkennung mittels zumindest eines Vergleichs eines gemessenen Wertes der Kapazität, insbesondere der absoluten Kapazität, mit einem oder mehreren, z.B. in der Detektionseinheit abgespeicherten, Referenzwerten erfolgt, und wobei zumindest ein Teil der zweiten Elektrode durch mindestens eines der folgenden gebildet wird:
- eine Pipettenspitzenhalterung (z.B. als separate/ dedizierte "Messstation" des Flüssigkeitsbearbeitungssystems ausgeführt) mit mindestens einer Aufnahme zum Aufnehmen der Pipettenspitze;
- mindestens ein Teil einer Auflage zum Absetzen einer Pipettenspitzenhalterung mit mindestens einer Aufnahme zum Aufnehmen der Pipettenspitze;
- mindestens ein Teil eines Arbeitstisches, über welchen die Pipettenröhre bewegbar ist;
- eine oder mehrere (benachbarte) Pipettenspitzen;
- eine oder mehrere (benachbarte) "z-Stangen" bzw. Pipettenröhrenhalter, welche zum Anbringen und vertikalen Bewegen einer Pipettenröhre geeignet sind.

Die zweite Elektrode, d.h. die Gegenelektrode, kann prinzipiell irgendein geeignetes Teil am bzw. Bestandteil des Flüssigkeitsbearbeitungssystems bzw. Laborgeräts sein, in welchem die Pipettiervorrichtung verwendet wird. So könnte beispielsweise eine metallische Platte vertikal an der Seite des Arbeitstisches angebracht werden, wobei die Pipettenröhre mittels eines Roboterarmes zur Kapazitätsmessung zu dieser Platte hinbewegt wird. Auch könnte anstatt des Arbeitstisches unterhalb der Pipettiervorrichtung eine leitende Decke bzw. Abdeckung (oder mindestens ein Teil davon) oberhalb der Pipettiervorrichtung als zweite Elektrode dienen. Zudem könnte auch eine Pipettenspitzenhalterung, z.B. in Form einer leitenden Lochplatte, die Funktion einer "Messstation" als Bestandteil des Flüssigkeitsbearbeitungssystems übernehmen. Insbesondere könnte auch eine oder mehrere benachbarte "z-Stangen" als Gegenelektrode eingesetzt werden. Jede Pipettierröhre ist an einer solchen vertikal angeordneten "z-Stange" angebracht, welche somit als Pipettenröhrenhalter dient, die sich mittels eines Antriebs auf und ab, d.h. in "z-Richtung" bewegen lässt, sodass die daran befestigte Pipettierröhre samt angeschlossener Pipettenspitze sich durch die z-Stange (vertikal) absenken bzw. anheben lässt. Die z-Stange kann beispielsweise als Zahnstange ausgeführt sein, die mittels eines Zahnrads angetrieben wird. Um als Gegenelektrode dienen zu können, muss die z-Stange aus einem leitenden Material bestehen und von der Pipettenröhre elektrisch isoliert sein, wobei sie z.B. mit der Masse verbunden ist bzw. auf dem Referenzpotential liegt.

In einer Ausführungsvariante der Pipettiervorrichtung sind die Referenzwerte für die Kapazität, insbesondere die absolute Kapazität, unterschiedlicher Pipettenspitzen kennzeichnend.

In einer weiteren Ausführungsvariante der Pipettiervorrichtung sind die Referenzwerte von einem oder mehreren der folgenden Eigenschaften abhängig:
- einem Material aus dem die Pipettenspitze besteht;
- einer Geometrie der Pipettenspitze, insbesondere einer Form der Pipettenspitze, wie z.B. einer Aussenkontur der Pipettenspitze, weiter insbesondere einem Durchmesser und/oder einer Länge der Pipettenspitze;
- einem Material aus dem die Pipettenspitzenhalterung besteht;
- einer Geometrie einer Aufnahme zum Aufnehmen der Pipettenspitze in der Pipettenspitzenhalterung, insbesondere einer Form der Aufnahme (bzw. deren Verlauf oder Kontur), weiter insbesondere einem Durchmesser und/oder einer Länge der Aufnahme;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einer Beschichtung der Pipettenspitzenhalterung insbesondere der Aufnahme, insbesondere einem Material aus dem die Beschichtung der Pipettenspitzenhalterung bzw. der Aufnahme besteht, weiter insbesondere einer Ausdehnung oder Dicke der Beschichtung der Pipettenspitzenhalterung bzw. der Aufnahme;
- einem oder mehreren Abständen oder Positionen zwischen der Pipettenspitze und einer oder mehreren (benachbarten) Pipettenspitzen.

In einer weiteren Ausführungsvariante der Pipettiervorrichtung umfasst die Kapazitätsmesseinheit einen Capacitance-to-Digital-Converter (CDC) oder einen Time-to-Digital-Converter (TDC). Ein CDC ist ein Wandler, der Kapazitäten in Spannungen umwandelt und auf dem Verfahren des Sigma-Delta-Wandlers basiert. Beim CDC-Verfahren wird für eine unbekannte Kapazität deren Grösse in Farad als Digitalwert bestimmt. Beispiele von im Handel erhältlichen CDC Bausteinen sind der FDC1004 von Texas Instruments sowie der AD7745 von Analog Devices. Bei einem TDC wird die Zeit gemessen, welche benötigt wird um einen Kondensator mit unbekannter Kapazität aufzuladen und daraus deren Grösse in Farad als Digitalwert bestimmt.

Gemäss einem weiteren Aspekt der vorliegenden Erfindung umfasst ein Verfahren zum Erkennen einer Pipettenspitze an einer Pipettiervorrichtung mit einer Pipettenröhre, die an ihrem einen Ende zum lösbaren Aufnehmen einer Pipettenspitze zum Aspirieren bzw. Dispensieren einer Flüssigkeit ausgebildet ist, und die an ihrem anderen Ende mit einem Druckerzeugungsmittel wirkverbunden ist, folgende Schritte:
- Verbinden der Pipettenspitze mit dem einen Ende der Pipettenröhre;
- Messen eines Wertes einer Kapazität, insbesondere einer absoluten Kapazität, eines Messkondensators, welcher eine erste Elektrode und eine zweite Elektrode als Gegenelektrode umfasst, wobei die Pipettenspitze zumindest ein Teil der ersten Elektrode, vorzugswiese einen überwiegenden Teil der ersten Elektrode, bildet;
- Vergleichen des gemessenen Wertes der Kapazität, insbesondere der absoluten Kapazität, mit einem oder mehreren Referenzwerten;
- Ausgabe einer Information in Abhängigkeit eines Ergebnisses des Vergleichs, welche angibt, ob eine Pipettenspitze mit der Pipettenröhre verbunden ist, und/oder welche ein charakteristisches Merkmal der Pipettenspitze angibt, insbesondere betreffend eine Ausgestaltung der Pipettenspitze, wie z.B. einer Grösse der Pipettenspitze,
wobei zumindest ein Teil der zweiten Elektrode durch mindestens eines der folgenden gebildet wird:
- eine Pipettenspitzenhalterung (z.B. als separate/ dedizierte "Messstation" des Flüssigkeitsbearbeitungssystems ausgeführt) mit mindestens einer Aufnahme zum Aufnehmen der Pipettenspitze;
- mindestens ein Teil einer Auflage zum Absetzen einer Pipettenspitzenhalterung mit mindestens einer Aufnahme zum Aufnehmen der Pipettenspitze;
- mindestens ein Teil eines Arbeitstisches, über welchen die Pipettenröhre bewegbar ist;
- eine oder mehrere (benachbarte) Pipettenspitzen;
- eine oder mehrere (benachbarte) "z-Stangen" bzw. Pipettenröhrenhalter, welche zum Anbringen einer Pipettenröhre ausgeführt sind.

In einer Ausführungsvariante des Verfahrens findet die Messung statt währendem die Pipettenspitze sich noch mindestens zum Teil in der Aufnahme befindet, insbesondere ein Teil der Pipettenspitze in die Aufnahme hineinragt.

In einer weiteren Ausführungsvariante des Verfahrens findet die Messung statt nachdem die Pipettenspitze vollständig aus der Aufnahme entfernt wurde, insbesondere nachdem die Pipettenspitze von der Pipettenspitzenhalterung entfernt wurde, und sich die Pipettenspitze über dem Arbeitstisch befindet, welcher dann einen im Vergleich zur Pipettenspitzenhalterung überwiegenden Teil der zweiten Elektrode bildet.

In einer weiteren Ausführungsvariante des Verfahrens findet die Messung statt währendem die Pipettenspitze sich mindestens zum Teil neben einer oder mehreren z-Stangen bzw. Pipettenröhrenhalter befindet, insbesondere auf gleicher Höhe wie diese ist, welche dann einen überwiegenden Teil der zweiten Elektrode bildet/bilden.

In einer weiteren Ausführungsvariante umfasst das Verfahren weiter die folgenden Schritte:
- Messen eines Vorabwertes der Kapazität, insbesondere der absoluten Kapazität, des Messkondensators bevor die Pipettenspitze mit dem Ende der Pipettenröhre verbunden ist;
- Verwenden des Vorabwertes als einen Referenzwert beim Vergleichen mit dem (danach) gemessenen Wert.

In einer weiteren Ausführungsvariante des Verfahrens werden während mindestens zweier Bewegungen, umfassend die Bewegungen a) Heranführen der Pipettenröhre an die Pipettenspitze, b) Verbinden der Pipettenspitze mit dem Ende der Pipettenröhre, c) Herausnehmen der Pipettenspitze aus der Aufnahme und d) Wegführen der Pipettenspitze von der Pipettenspitzenhalterung, eine Vielzahl von Werten der Kapazität, insbesondere der absoluten Kapazität, des Messkondensators gemessen, und aus dieser Vielzahl von Werten ein maximaler Messwert ermittelt, welche dann mit dem einen oder den mehreren Referenzwerten verglichen wird.

In einer weiteren Ausführungsvariante des Verfahrens werden während mindestens zweier Bewegungen, umfassend die Bewegungen a) Heranführen der Pipettenröhre an die Pipettenspitze, b) Verbinden der Pipettenspitze mit dem Ende der Pipettenröhre, c) Herausnehmen der Pipettenspitze aus der Aufnahme und d) Wegführen der Pipettenspitze von der Pipettenspitzenhalterung, eine Vielzahl von Werten der Kapazität, insbesondere der absoluten Kapazität, des Messkondensators gemessen, wobei mindestens ein Teil dieser Vielzahl von Werten ein zeitlicher Verlauf der Kapazität, insbesondere der absoluten Kapazität, bildet, welcher mit einem oder mehreren zeitlichen Verläufen bestehend aus mehreren Referenzwerten verglichen wird.

In einer Ausführungsvariante des Verfahrens erfolgt das Messen des Wertes der Kapazität indem eine Kapazitätsänderung, d.h. eine relative Kapazität bestimmt wird, wobei die Kapazitätsänderung beispielsweise durch eine Bewegung der ersten und zweiten Elektroden relativ zueinander hervorgerufen wird.

In einer weiteren Ausführungsvariante des Verfahrens sind die Referenzwerte für die Kapazität, insbesondere die absolute Kapazität, unterschiedlicher Pipettenspitzen kennzeichnend.

In einer weiteren Ausführungsvariante des Verfahrens sind die Referenzwerte von einem oder mehreren der folgenden Eigenschaften abhängig:
- einem Material aus dem die Pipettenspitze besteht;
- einer Geometrie der Pipettenspitze, insbesondere einer Form der Pipettenspitze, wie z.B. einer Aussenkontur der Pipettenspitze, weiter insbesondere einem Durchmesser und/oder einer Länge der Pipettenspitze;
- einem Material aus dem die Pipettenspitzenhalterung besteht;
- einer Geometrie einer Aufnahme zum Aufnehmen der Pipettenspitze in der Pipettenspitzenhalterung, insbesondere einer Form der Aufnahme, weiter insbesondere einem Durchmesser und/oder einer Länge der Aufnahme;
- einer Beschichtung der Pipettenspitze, insbesondere einem Material aus dem die Beschichtung der Pipettenspitze besteht, weiter insbesondere einer Ausdehnung oder Dicke der Beschichtung der Pipettenspitze;
- einer Beschichtung der Pipettenspitzenhalterung insbesondere der Aufnahme, insbesondere einem Material aus dem die Beschichtung der Pipettenspitzenhalterung bzw. der Aufnahme besteht, weiter insbesondere einer Ausdehnung oder Dicke der Beschichtung der Pipettenspitzenhalterung bzw. der Aufnahme;
- einem oder mehreren Abständen oder Positionen zwischen der Pipettenspitze und einer oder mehreren (benachbarten) Pipettenspitzen.

Für den Einsatz mit der vorliegenden Erfindung ist ein Satz von Pipettenspitzenhalterungen geeignet, wobei jede Pipettenspitzenhalterung mindestens eine Aufnahme zum Aufnehmen einer Pipettenspitze aufweist, und wobei eine Geometrie der Aufnahme, insbesondere eine Form der Aufnahme, weiter insbesondere ein Durchmesser und/oder eine Länge der Aufnahme, so ausgeführt ist, dass bei der vorgeschlagenen Pipettiervorrichtung oder dem vorgeschlagenen Flüssigkeitsbearbeitungssystem oder dem vorgeschlagenen Verfahren sich unterschiedliche Referenzwerte für verschiedene Typen von Pipettenspitzen ergeben, wobei sich die verschiedenen Typen von Pipettenspitzen insbesondere durch eines der folgenden Merkmale unterscheiden:
- (Fassungs-/Nenn-)Volumen;
- Spitzenöffnungsgrösse/-durchmesser zum Aspirieren und Dispensieren einer Flüssigkeit;
- mit oder ohne Filter zur Verhinderung von Kontaminationen der Pipettenröhre beim Aspirieren einer Probe, sowie insbesondere eine Art des Filters;
- Reinheitskategorie;
- Verwendungszweck;
- Dichtungsvermögen eines Anschlusses der Pipettenspitzen an die Pipettenröhre,
und wobei insbesondere die äussere Geometrie die verschiedenen Typen von Pipettenspitzen identisch ist.

Zusätzlich oder alternative zur Geometrie der Aufnahme kann die Pipettenspitzenhalterung insbesondere die Aufnahme oder ein Bereich davon und/oder darum derart beschichtet, dass bei der vorgeschlagenen Pipettiervorrichtung oder dem vorgeschlagenen Flüssigkeitsbearbeitungssystem oder dem vorgeschlagenen Verfahren sich unterschiedliche Referenzwerte für unterschiedliche Pipettenspitzen ergeben, z.B. aufgrund eines Materials der Beschichtung und/oder einer Dicke der Beschichtung, wobei die Beschichtung insbesondere zumindest ein Teil eines Dielektrikums zwischen der ersten und zweiten Elektrode bildet.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: drei verschiedene Pipettenspitzen;
- Fig. 2: eine Pipettenspitzenhalterung mit eingesetzten Pipettenspitzen;
- Fig. 3: eine schematische Darstellung eines Ausführungsbeispiels einer erfindungsgemässen Pipettiervorrichtung bzw. eines erfindungsgemässen Flüssigkeitsbearbeitungssystems;
- Fig. 4: schematische Darstellungen dreier Anordnungen a), b) & c) zur Messung der Kapazität gemäss einem Ausführungsbeispiel eines alternativen erfindungsgemässen Verfahrens zum Erkennen einer Pipettenspitze;
- Fig. 5: schematische Darstellungen von vier unterschiedlichen Ausführungsbeispielen a), b), c) & d) von Aufnahmen in erfindungsgemässen Pipettenspitzenhalterungen;
- Fig. 6 a): schematische Darstellung des Bewegungsablaufs beim Aufnehmen einer Pipettenspitze durch eine Pipettenröhre an den Positionen P1, P2 & P3; und

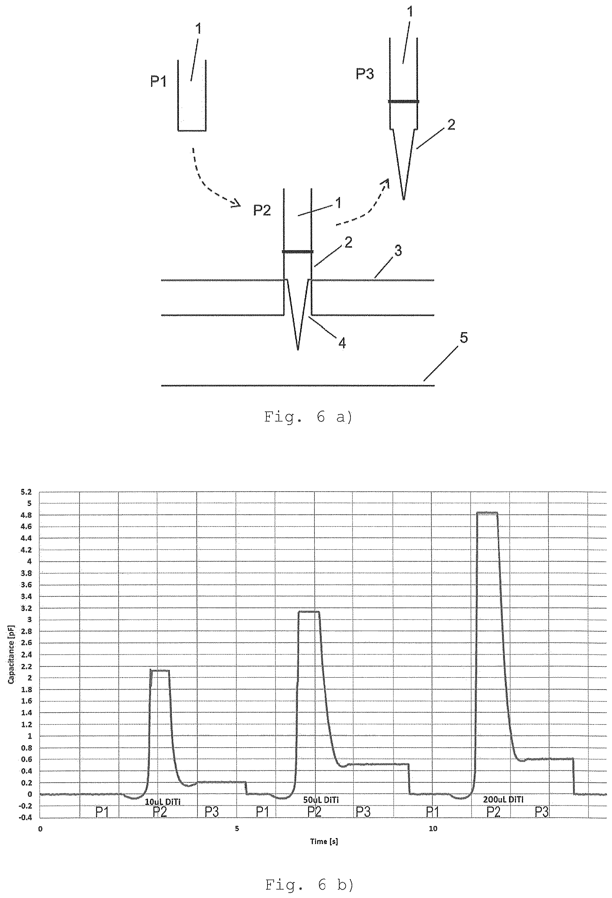

- Fig. 6 b): zeitliche Verläufe der absoluten Kapazität für drei verschieden grosse Pipettenspitzen (mit Markierungen an den Positionen P1, P2 & P3 aus Fig. 6 a)).

In den Figuren stehen gleiche Bezugszeichen für gleiche Elemente.

### DETAILLIERTE BESCHREIBUNG DER ERFINDUNG

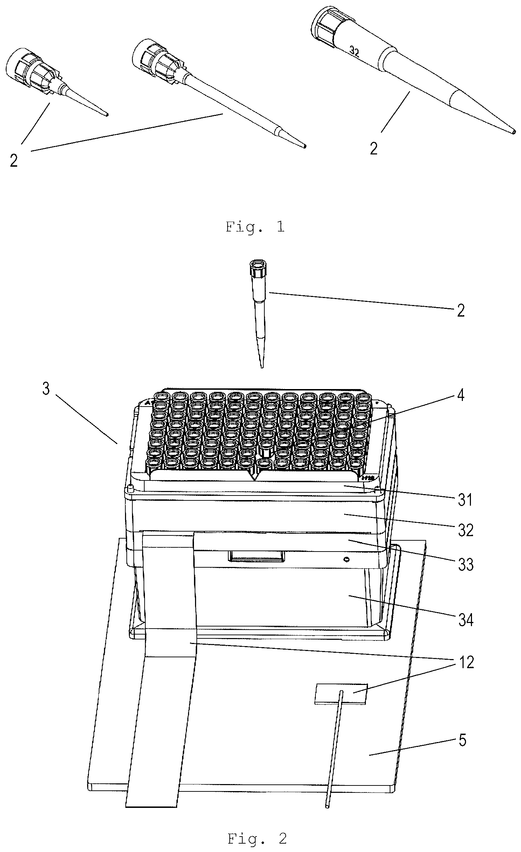

Fig. 1 zeigt drei Wegwerf-Pipettenspitzen ("disposable tips", DiTi) 2 mit unterschiedlichem Flüssigkeits-Fassungsvermögen/Nennvolumen (10 µl, 50 µl & 200 µl). Diese bestehen aus einem leitenden Polypropylen und ermöglichen damit eine kapazitive Flüssigkeitspegeldetektion ("capacitive liquid level detection", cLLD). Solche Pipettenspitzen sind nicht nur in unterschiedlichen Grössen verfügbar, sondern es gibt auch solche mit einem Filter, welcher verhindert, dass Probenflüssigkeit in die Pipettenröhre eindringt und diese kontaminiert. Weiter gibt es unterschiedlich reine Pipettenspitzen (z.B. von der Firma Tecan die Varianten "Standard", "Pure" und "Sterile"). Diese Pipettenspitzen können gleich gross sein, sodass eine optische Unterscheidung zwischen den verschiedenen Typen schwierig sein kann. Zudem weisen diese Pipettenspitzen nur ein sehr geringes Gewicht auf, sodass die Pipettiervorrichtung nur schwerlich aufgrund dieses Gewichts feststellen kann, ob überhaupt eine Pipettenspitze an der Pipettenröhre angeschlossen ist.

Die Kernidee der vorliegenden Erfindung liegt nun darin die leitende Pipettenspitze als eine Elektrode (bzw. zumindest als Teilelektrode) eines Messkondensators zu nutzen, wobei die Gegenelektrode (bzw. Teil davon) z.B. durch die Pipettenspitzenhalterung, insbesondere durch die Pipettenspitzenaufnahme in der Pipettenspitzenhalterung, gebildet wird, in welcher die Pipettenspitzen für die Pipettiervorrichtung bereitgestellt werden. Der leitende Arbeitstisch, auf welchem die Pipettiervorgänge stattfinden, kann zudem ein weiterer Teil der Gegenelektrode bilden. Ferner kann auch eine leitende Auflage zum Absetzen einer Pipettenspitzenhalterung auf dem Arbeitstisch auch Teil der Gegenelektrode bilden. Prinzipiell muss die Pipettenspitzenhalterung nicht aus einem leitenden Material bestehen, und würde in diesem Fall das Dielektrikum (bzw. Teil davon) des Messkondensators bilden. Jede Pipettenspitze kann dann aufgrund des gemessenen Wertes der Kapazität, insbesondere der absoluten Kapazität, des Messkondensators zuverlässig erkannt werden.

Fig. 2 zeigt eine solche Pipettenspitzenhalterung 3 mit einer Vielzahl von in die Aufnahmen 4 eingesetzten Pipettenspitzen 2. Die Pipettenspitzenhalterung 3 ist im vorliegenden Fall mehrteilig ausgeführt mit einem oberen Teil 31, einem mittleren Teil 32 und einem unteren Teil 33. Im oberen Teil 31 und mittleren Teil 32 sind die Aufnahmen 4, wobei die Pipettenspitzen 2 auf dem oberen Teil 31 aufliegen. Der obere Teil 31 und/oder der mittlere Teil 32 ist/sind nicht-leitend, wobei der nicht-leitende Teil als Dielektrikum des Messkondensators wirkt. Der untere Teil 33 ist als leitende Lochplatte ausführt und bildet (zumindest teilweise) die Gegenelektrode des Messkondensators, wobei die Aufnahmen 4 in die Lochplatte 33 hineinragen. Die Pipettenspitzenhalterung 3 befindet sich auf einem Arbeitstisch 5, welcher auf dem Referenzpotential liegt, insbesondere mit Masse verbunden ist. Die Lochplatte 33 kann entweder über eine leitende Verbindung 12 oder eine leitende Auflage 34 elektrisch mit Masse verbunden sein. Eine Kapazitätsmesseinheit ist nun einerseits mit der Pipettenröhre und andererseits mit dem Arbeitstisch 5 sowie über diesen mit der darauf stehenden Auflage 34 und der Pipettenspitzenhalterung 3, insbesondere mit dem unteren Teil 33, d.h. der leitenden Lochplatte, verbunden. Bereits die Pipettenröhre ohne Pipettenspitze 2 bildet eine kleine Elektrode, sodass der durch diese Anordnung gebildete Messkondenstor noch ohne Pipettenspitze 2 eine geringfügige Kapazität aufweist. Sobald die Pipettenspitze 2 mit der Pipettenröhre verbunden ist, steigt der Wert der gemessenen Kapazität stark an, wobei der Wert vom Typ (z.B. der Grösse) der Pipettenspitze 2 abhängig ist, und folglich dieser Typ über den gemessenen Kapazitätswert zuverlässig erkannt werden kann.

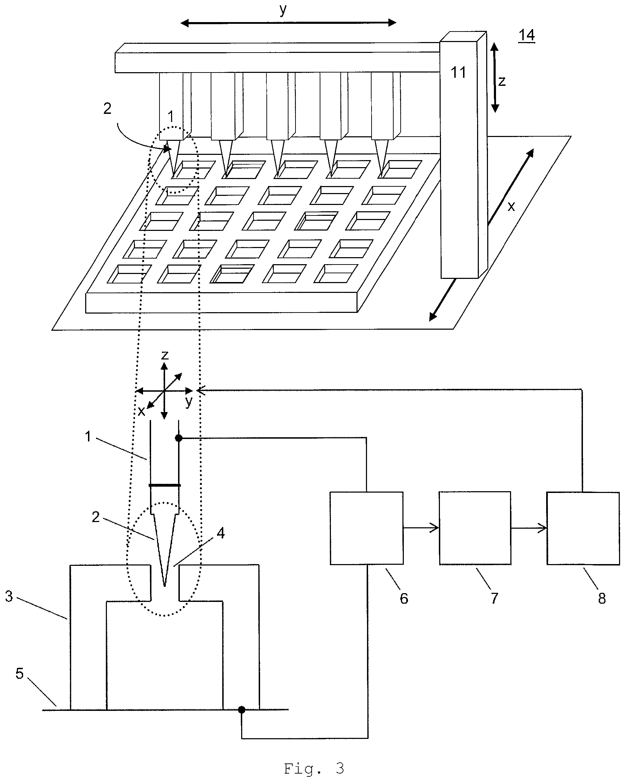

Fig. 3 illustriert in einer vereinfachten schematischen Darstellung ein Ausführungsbeispiel eines erfindungsgemässen Flüssigkeitsbearbeitungssystem 14 mit einer Pipettiervorrichtung. Diese Abbildung zeigt die Pipettenröhre 1 mit einer aufgesetzten Pipettenspitze 2, welche zuvor aus einer Aufnahme 4 der Pipettenspitzenhalterung 3 entnommen wurde und nun von einem Roboterarm 11 am Flüssigkeitsbearbeitungssystem 14 vertikal nach oben bewegt und damit von der Pipettenspitzenhalterung 3 entfernt wird. Dabei kann eine Kapazitätsmesseinheit 6, welche mit der Pipettenröhre 1 und damit auch mit der Pipettenspitze 2 als erste Elektrode und mit dem Arbeitstisch 5 und damit auch mit der Pipettenspitzenhalterung 3 (oder einem Bestandteil davon) als zweite (Gegen-)Elektrode verbunden ist, die (absolute) Kapazität des diese beiden Elektroden umfassenden Messkondensators bestimmen. Je nach Typ oder Art (z.B. Grösse/Fassungsvolumen) der Pipettenspitze 2 wird der gemessene Wert der Kapazität unterschiedlich sein. Dazu wird der gemessene Wert der Kapazität in einer Detektionseinheit 7 mit verschiedenen Referenzwerten verglichen, wobei jeder Referenzwert charakteristisch ist für einen bestimmten Typ oder eine bestimmte Art von Pipettenspitze 2. Die Detektionseinheit 7 gibt dann eine Information darüber, ob eine Pipettenspitze 2 an der Pipettenröhre 1 angeschlossen ist, und falls ja um welchen Typ oder Art von Pipettenspitze 2 es sich handelt, an eine Steuerungseinheit 8 eines Antriebs für den Roboterarm 11 weiter.

Eine solche Pipettenspitzenhalterung 3 kann beispielsweise auch Teil des Flüssigkeitsbearbeitungssystems 14 sein, wobei der Roboterarm 11 zur Bestimmung der Kapazität und damit zur Detektion des Pipettenspitzentyps bzw. der Pipettenspitzengrösse die Pipettenröhre 1 mit angeschlossener Pipettenspitze 2 jeweils zur Pipettenspitzenhalterung 3 hinbewegt und zur Kapazitätsmessung in die Aufnahme 4 absenkt. So stellt die Pipettenspitzenhalterung 3 eine separate/dedizierte "Messstation" zur Pipettenspitzenerkennung innerhalb des Flüssigkeitsbearbeitungssystems 14 dar.

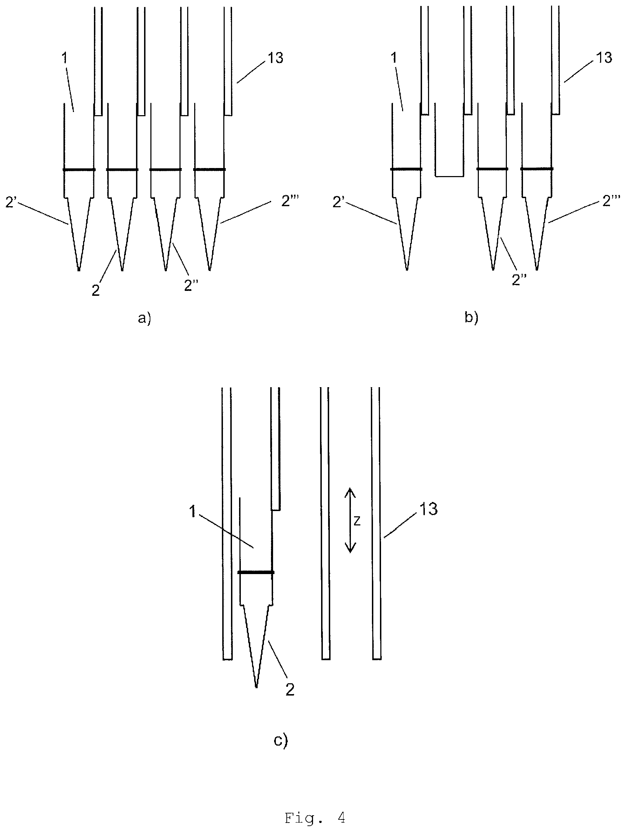

Fig. 4 illustriert in einer schematischen Darstellung drei Anordnungen a), b) & c) zur Messung der Kapazität gemäss einer alternativen Ausführungsform des erfindungsgemässen Verfahrens zum Erkennen der Pipettenspitze 2. Bei einer ersten alternativen Ausführungsvariante des Verfahrens bilden die benachbarten Pipettenspitzen 2', 2", 2''' die Gegenelektrode (= zweite Elektrode) zur ersten Elektrode, welche die Pipettenspitze 2 umfasst (s. Fig. 4 a)). Es genügt bereits eine einzelne der drei benachbarten Pipettenspitzen 2', 2'', 2''' um diese Ausführungsvariante des Verfahrens auszuführen. Fig. 4 b) zeigt den Fall, wo keine Pipettenspitze 2 auf der Pipettenröhre 1 aufgesetzt ist. In diesem Fall wird die (absolute) Kapazität des Messkondensators geringer sein, als wenn sich eine Pipettenspitze 2 an der Pipettenröhre 1 befindet, da die erste Elektrode nun im Wesentlichen nur die Pipettenröhre 1 umfasst, sodass die Detektionseinheit 7 aufgrund des Vergleichs mit den Referenzwerten feststellen wird, dass keine Pipettenspitze 2 an der Pipettenröhre 1 angeschlossen ist. In Fig. 4 c) ist eine weitere Ausführungsvariante des Verfahrens dargestellt, bei welcher die Pipettenspitze 2 als erste Elektrode zur Kapazitätsmessung neben mehreren benachbarten "z-Stangen" bzw. Pipettenröhrenhalter 13 als (Teil der) zweiten Elektrode (d.h. als Gegenelektrode) positioniert ist. Dazu werden die benachbarten z-Stangen (mit oder ohne angeschlosserer Pipettenröhre 1 und -spitze 2', 2'', 2''') in etwa auf gleiche Höhe wie die zu erkennende Pipettenspitze 2 abgesenkt (angedeutet durch den vertikalen Doppelpfeil in z-Richtung).

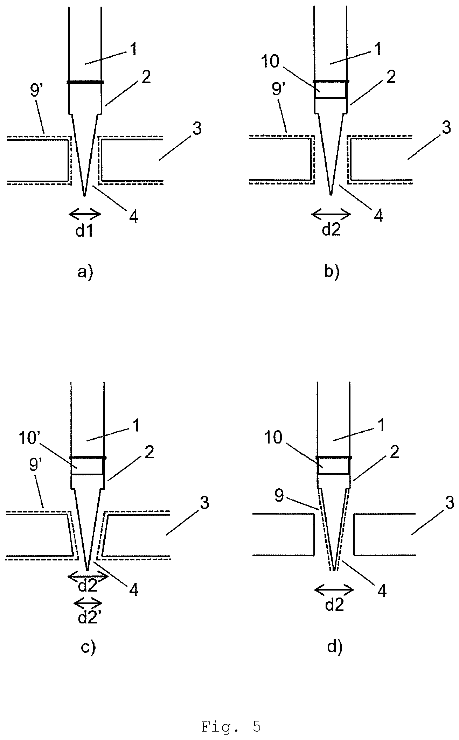

In Fig. 5 sind vier unterschiedliche Ausführungsbeispiele a), b), c) & d) von Aufnahmen 4 in Pipettenspitzenhalterungen 3 schematisch dargestellt. In Fig. 5 a) ist die Aufnahme 4 als zylindrische Bohrung mit einem Durchmesser d1 ausgeführt. Die Kapazität, welche sich ergibt, wenn die Pipettenspitze 2 an der Pipettenröhre 1 angeschlossen ist und sich in der Aufnahme 4 befindet (elektrisch isoliert von dieser), weist einen bestimmten Wert auf, welcher charakteristisch ist für diese Anordnung und in der Detektionseinheit 7 zur Erkennung dieser Pipettenspitze 2 als Referenzwert verwendet wird. In Fig. 5 b) ist ein Filter 10 in der Pipettenspitze 2 eingebaut bzw. integriert. Um diesen Typ von Pipettenspitze 2 mit Filter 10 erkennen zu können, kann beispielsweise für die Aufnahme 4 eine Bohrung mit einem grösseren Durchmesser d2 verwendet werden. Aufgrund der geänderten Geometrie wird auch die gemessene Kapazität dieser Elektroden-Anordnung eine andere sein. Alternativ könnte die vertikale Dicke der Aufnahme 4 anders gewählt werden. Auch dies würde zu einer Änderung der gemessenen Kapazität führen. Eine weitere Möglichkeit ist in Fig. 5 c) dargestellt, wo die Form der Aufnahme 4 geändert wurde und nun konisch ausgeführt ist mit maximalem Durchmesser d2 und minimalem Durchmesser d2'. Auch dies führt wiederum zu einer Veränderung der gemessenen Kapazität und könnte als charakteristisches Merkmal für eine Pipettenspitze 2 mit einer anderen Filtersorte verwendet werden, womit ein entsprechender Referenzwert in der Detektionseinheit 7 zur Erkennung dieser Pipettenspitze 2 abgespeichert wird. Ferner könnte z.B. auch, wie in Fig. 5 d) gezeigt, die Pipettenspitze 2 mit einer Beschichtung 9 als Dielektrikum (und Isolator) versehen werden, welche wiederum zur Folge hat, dass die gemessene Kapazität einen anderen Wert aufweist, der charakteristisch ist für diese Pipettenspitze 2. Anstatt die Pipettenspitze 2 zu beschichten, könnte auch die Pipettenspitzenhalterung 3 und insbesondere die Aufnahme 4 mit einer Beschichtung 9' (als Dielektrikum und Isolator) versehen werden, um eine Änderung der gemessenen Kapazität zu erreichen (s. Fig. 5 a)-c)). Grundsätzlich können irgendwelche Merkmale der ersten und zweiten Elektrode (wie z.B. deren Grösse, Material, Form) oder des Zwischenraums zwischen diesen, welche das Dielektrikum des Messkondensators bildet, in irgendeiner Weise geändert werden um eine gewünschte Kapazität des Messkondensators zu erhalten, dessen Wert als Referenzwert kennzeichnend ist für eine bestimmte Messanordnung und damit für einen spezifischen Typ oder Art von Pipettenspitze 2.

Fig. 6 a) stellt den Bewegungsablauf beim Aufnehmen einer Pipettenspitze 2 durch die Pipettenröhre 1 schematisch dar, wobei drei spezifische Positionen P1, P2 & P3 gezeigt sind. In Fig. 6 b) ist der zeitliche Verlauf der gemessenen absoluten Kapazität für den Bewegungsablauf gemäss Fig. 6 a) dargestellt und zwar für drei unterschiedlich grosse Pipettenspitze 2 mit Fassungsvermögen/Nennvolumen 10 µl, 50 µl & 200 µl. An der Position P1 befindet sich noch keine Pipettenspitze 2 an der Pipettenröhre 1 und die gemessene Kapazität beträgt ungefähr 0 pF. Beim Aufnehmen der Pipettenspitze 2 durch die Pipettenröhre 1 aus der Aufnahme 4 in der Pipettenspitzenhalterung 3 also an der Position P2 ist die gemessen Kapazität maximal (wobei die Pipettenspitze 2 und die Aufnahme 4 voneinander elektrisch isoliert sind). Je nach Grösse der Pipettenspitze 2 beträgt der Wert der gemessenen Kapazität ca. 2.1 pF, 3.1 pF & 4.8 pF. Diese Werte entsprechen in etwa den Referenzwerten, welche in der Detektionseinheit 7 abgespeichert sind zur Erkennung dieser drei verschiedenen Pipettenspitzen 2. Des Weiteren ist aus der Graphik in Fig. 6 b) ersichtlich, dass die gemessene Kapazität an der Position P3 höher ist (ca. 0.2 pF, 0.5 pF & 0.6 pF) als an der Position P1, da nun die Pipettenspitze 2 als erste Elektrode (bzw. als zusätzlicher Teil davon) wirkt. Somit kann z.B. nach der Entnahme der Pipettenspitze 2 aus der Aufnahme 4 überprüft werden, ob die Pipettenspitze 2 auch tatsächlich an der Pipettenröhre 1 angeschlossen ist, oder ob das Aufnehmen der Pipettenspitze 2 nicht geklappt hat.

### LISTE DER BEZUGSZEICHEN

- 1: Pipettenröhre
- 2: Pipettenspitze
- 2': erste benachbarte Pipettenspitze
- 2'': zweite benachbarte Pipettenspitze
- 2''': dritte benachbarte Pipettenspitze
- 3: Pipettenspitzenhalterung/-träger
- 31: oberer Teil der Pipettenspitzenhalterung
- 32: mittlerer Teil der Pipettenspitzenhalterung
- 33: unterer (leitender) Teil der Pipettenspitzenhalterung
- 34: Auflage der Pipettenspitzenhalterung
- 4: Aufnahme
- 5: Arbeitstisch
- 6: Kapazitätsmesseinheit
- 7: Detektionseinheit
- 8: Steuerungseinheit zur Bewegungssteuerung des Antriebs/ Roboterarms
- 9: Beschichtung der Pipettenspitze
- 9': Beschichtung der Pipettenspitzenhalterung
- 10: Filter
- 11: Antrieb/Roboterarm
- 12: Verbindung zu Masse/Referenzpotential
- 13: z-Stange/Pipettenröhrenhalter
- 14: Flüssigkeitsbearbeitungssystem
- d1: Durchmesser Aufnahme für Pipettenspitze ohne Filter
- d2: (gr.) Durchmesser Aufnahme für Pipettenspitze mit Filter
- d2': kl. Durchmesser Aufnahme für Pipettenspitze mit Filter
- P1: erste Position der Pipettenröhre (beim Annähern an die Pipettenspitzenhalterung vor dem Aufnehmen der Pipettenspitze)
- P2: zweite Position der Pipettenspitze (während dem Aufnehmen der Pipettenspitze aus der Pipettenspitzenhalterung)
- P3: dritte Position der Pipettenspitze (beim Wegbewegen von der Pipettenspitzenhalterung nach dem Aufnehmen der Pipettenspitze)

## Patentansprüche

1. Flüssigkeitsbearbeitungssystem (14) mit einer Pipettiervorrichtung umfassend:
- eine Pipettenröhre (1), die an ihrem einen Ende zum lösbaren Aufnehmen einer Pipettenspitze (2) zum Aspirieren bzw. Dispensieren einer Flüssigkeit ausgebildet ist, und die an ihrem anderen Ende mit einem Druckerzeugungsmittel wirkverbindbar ist; und
- eine Kapazitätsmesseinheit (6) zur Messung einer Kapazität, insbesondere einer absoluten Kapazität, eines Messkondensators, welcher eine erste Elektrode und eine zweite Elektrode als Gegenelektrode umfasst, wobei die zweite Elektrode Bestandteil des Flüssigkeitsbearbeitungssystems (14) ist, **dadurch gekennzeichnet, dass** die Pipettiervorrichtung
- eine Detektionseinheit (7) zur Erkennung ob eine Pipettenspitze (2) mit dem einen Ende der Pipettenröhre (1) verbunden ist, und/oder zur Erkennung eines charakteristischen Merkmals der Pipettenspitze (2), welche mit dem einen Ende der Pipettenröhre (1) verbunden ist umfasst,
wobei die Pipettenspitze (2) zumindest einen Teil der ersten Elektrode bildet, wenn die Pipettenspitze (2) in elektrischer Wirkverbindung mit der Pipettenröhre (1) steht, und
wobei die Detektionseinheit (7) derart ausgebildet ist, dass die Erkennung mittels zumindest eines Vergleichs eines gemessenen Wertes der Kapazität, insbesondere der absoluten Kapazität, mit einem oder mehreren Referenzwerten erfolgt, und
wobei zumindest ein Teil der zweiten Elektrode durch mindestens eines der folgenden gebildet wird:
- eine Pipettenspitzenhalterung (3) mit mindestens einer Aufnahme (4) zum Aufnehmen der Pipettenspitze (2);
- mindestens ein Teil einer Auflage (33) zum Absetzen einer Pipettenspitzenhalterung (3) mit mindestens einer Aufnahme (4) zum Aufnehmen der Pipettenspitze (2);
- mindestens ein Teil eines Arbeitstisches (5), über welchen die Pipettenröhre (1) bewegbar ist;
- eine oder mehrere Pipettenspitzen (2', 2'', 2''');
- eine oder mehrere Pipettenröhrenhalter (13), welche zum Anbringen einer Pipettenröhre (1) ausgeführt sind.

2. Flüssigkeitsbearbeitungssystem (14) nach Anspruch 1, wobei die Referenzwerte für die Kapazität, insbesondere die absolute Kapazität, unterschiedlicher Pipettenspitzen (2) kennzeichnend sind.

3. Flüssigkeitsbearbeitungssystem (14) nach Anspruch 1 oder 2, wobei die Referenzwerte von einem oder mehreren der folgenden Eigenschaften abhängig sind:
- einem Material aus dem die Pipettenspitze (2) besteht;
- einer Geometrie der Pipettenspitze (2), insbesondere einer Form der Pipettenspitze (2), weiter insbesondere einem Durchmesser und/oder einer Länge der Pipettenspitze (2);
- einem Material aus dem die Pipettenspitzenhalterung (3) besteht;
- einer Geometrie der Aufnahme (4) zum Aufnehmen der Pipettenspitze (2) in der Pipettenspitzenhalterung (3), insbesondere einer Form der Aufnahme (4), weiter insbesondere einem Durchmesser und/oder einer Länge der Aufnahme (4);
- einer Beschichtung (9) der Pipettenspitze (2), insbesondere einem Material aus dem die Beschichtung (9) der Pipettenspitze (2) besteht, weiter insbesondere einer Ausdehnung oder Dicke der Beschichtung (9) der Pipettenspitze (2);
- einer Beschichtung (9') der Pipettenspitzenhalterung (3) insbesondere der Aufnahme (4), insbesondere einem Material aus dem die Beschichtung (9') der Pipettenspitzenhalterung (3) bzw. der Aufnahme (4) besteht, weiter insbesondere einer Ausdehnung oder Dicke der Beschichtung (9') der Pipettenspitzenhalterung (3) bzw. der Aufnahme (4);
- einem oder mehreren Abständen oder Positionen zwischen der Pipettenspitze (2) und einer oder mehreren anderen Pipettenspitzen (2', 2'', 2''').

4. Flüssigkeitsbearbeitungssystem (14) nach einem der Ansprüche 1 bis 3, wobei die Kapazitätsmesseinheit (6) einen Capacitance-to-Digital-Converter oder einen Time-to-Digital-Converter umfasst.

5. Verfahren zum Erkennen einer Pipettenspitze (2) an einer Pipettiervorrichtung mit einer Pipettenröhre (1), die an ihrem einen Ende zum lösbaren Aufnehmen einer Pipettenspitze (2) zum Aspirieren bzw. Dispensieren einer Flüssigkeit ausgebildet ist, und die an ihrem anderen Ende mit einem Druckerzeugungsmittel wirkverbunden ist, wobei das Verfahren folgende Schritte umfasst:
- Verbinden der Pipettenspitze (2) mit dem einen Ende der Pipettenröhre (1);
- Messen eines Wertes einer Kapazität, insbesondere einer absoluten Kapazität, eines Messkondensators, welcher eine erste Elektrode und eine zweite Elektrode als Gegenelektrode umfasst, wobei die Pipettenspitze (2) zumindest ein Teil der ersten Elektrode, vorzugswiese einen überwiegenden Teil der ersten Elektrode, bildet;
- Vergleichen des gemessenen Wertes der Kapazität, insbesondere der absoluten Kapazität, mit einem oder mehreren Referenzwerten;
- Ausgabe einer Information in Abhängigkeit eines Ergebnisses des Vergleichs, welche angibt, ob eine Pipettenspitze (2) mit der Pipettenröhre (1) verbunden ist, und/oder welche ein charakteristisches Merkmal der Pipettenspitze (2) angibt, insbesondere betreffend eine Ausgestaltung der Pipettenspitze (2),
wobei zumindest ein Teil der zweiten Elektrode durch mindestens eines der folgenden gebildet wird:
- eine Pipettenspitzenhalterung (3) mit mindestens der Aufnahme (4) zum Aufnehmen der Pipettenspitze (2);
- mindestens ein Teil einer Auflage (33) zum Absetzen einer Pipettenspitzenhalterung (3) mit mindestens der Aufnahme (4) zum Aufnehmen der Pipettenspitze (2);
- mindestens ein Teil eines Arbeitstisches (5), über welchen die Pipettenröhre (1) bewegbar ist;
- eine oder mehrere Pipettenspitzen (2', 2'', 2''');
- eine oder mehrere Pipettenröhrenhalter (13), welche zum Anbringen einer Pipettenröhre (1) ausgeführt sind.

6. Verfahren nach Anspruch 5, wobei die Messung stattfindet währendem die Pipettenspitze (2) sich noch mindestens zum Teil in der Aufnahme (4) befindet, insbesondere ein Teil der Pipettenspitze (2) in die Aufnahme (4) hineinragt.

7. Verfahren nach Anspruch 5, wobei die Messung stattfindet nachdem die Pipettenspitze (2) vollständig aus der Aufnahme (4) entfernt wurde, insbesondere nachdem die Pipettenspitze (2) von der Pipettenspitzenhalterung (3) entfernt wurde, und sich die Pipettenspitze (2) über dem Arbeitstisch (5) befindet, welcher dann einen im Vergleich zur Pipettenspitzenhalterung (3) überwiegenden Teil der zweiten Elektrode bildet.

8. Verfahren nach Anspruch 5, wobei die Messung stattfindet währendem die Pipettenspitze (2) sich mindestens zum Teil neben einer oder mehreren Pipettenröhrenhalter (13) befindet, insbesondere auf gleicher Höhe wie diese ist, welche dann einen überwiegenden Teil der zweiten Elektrode bilden.

9. Verfahren nach einem der Ansprüche 5 bis 8, weiter umfassend:
- Messen eines Vorabwertes der Kapazität, insbesondere der absoluten Kapazität, des Messkondensators bevor die Pipettenspitze (2) mit dem Ende der Pipettenröhre (1) verbunden ist;
- Verwenden des Vorabwertes als einen Referenzwert beim Vergleichen mit dem gemessenen Wert.

10. Verfahren nach Anspruch 5, wobei während mindestens zweier Bewegungen, umfassend die Bewegungen a) Heranführen der Pipettenröhre (1) an die Pipettenspitze (2), b) Verbinden der Pipettenspitze (2) mit dem Ende der Pipettenröhre (1), c) Herausnehmen der Pipettenspitze (2) aus der Aufnahme (4) und d) Wegführen der Pipettenspitze (2) von der Pipettenspitzenhalterung (3), eine Vielzahl von Werten der Kapazität, insbesondere der absoluten Kapazität, des Messkondensators gemessen werden, und aus dieser Vielzahl von Werten ein maximaler Messwert ermittelt wird, welche mit dem einen oder den mehreren Referenzwerten verglichen wird.

11. Verfahren nach Anspruch 5, wobei während mindestens zweier Bewegungen, umfassend die Bewegungen a) Heranführen der Pipettenröhre (1) an die Pipettenspitze (2), b) Verbinden der Pipettenspitze (2) mit dem Ende der Pipettenröhre (1), c) Herausnehmen der Pipettenspitze (2) aus der Aufnahme (4) und d) Wegführen der Pipettenspitze (2) von der Pipettenspitzenhalterung (3), eine Vielzahl von Werten der Kapazität, insbesondere der absoluten Kapazität, des Messkondensators gemessen werden, wobei mindestens ein Teil dieser Vielzahl von Werten ein zeitlicher Verlauf der Kapazität, insbesondere der absoluten Kapazität, bildet, welcher mit einem oder mehreren zeitlichen Verläufen bestehend aus mehreren Referenzwerten verglichen wird.

12. Verfahren nach einem der Ansprüche 5 bis 11, wobei die Referenzwerte für die Kapazität, insbesondere die absolute Kapazität, unterschiedlicher Pipettenspitzen (2) kennzeichnend sind.

13. Verfahren nach einem der Ansprüche 5 bis 12, wobei die Referenzwerte von einem oder mehreren der folgenden Eigenschaften abhängig sind:
- einem Material aus dem die Pipettenspitze (2) besteht;
- einer Geometrie der Pipettenspitze (2), insbesondere einer Form der Pipettenspitze (2), weiter insbesondere einem Durchmesser und/oder einer Länge der Pipettenspitze (2);
- einem Material aus dem die Pipettenspitzenhalterung (3) besteht;
- einer Geometrie der Aufnahme (4) zum Aufnehmen der Pipettenspitze (2) in der Pipettenspitzenhalterung (3), insbesondere einer Form der Aufnahme (4), weiter insbesondere einem Durchmesser und/oder einer Länge der Aufnahme (2);
- einer Beschichtung (9) der Pipettenspitze (2), insbesondere einem Material aus dem die Beschichtung (9) der Pipettenspitze (2) besteht, weiter insbesondere einer Ausdehnung oder Dicke der Beschichtung (9) der Pipettenspitze (2);
- einer Beschichtung (9') der Pipettenspitzenhalterung (3) insbesondere der Aufnahme (4), insbesondere einem Material aus dem die Beschichtung (9') der Pipettenspitzenhalterung (3) bzw. der Aufnahme (4) besteht, weiter insbesondere einer Ausdehnung oder Dicke der Beschichtung (9') der Pipettenspitzenhalterung (3) bzw. der Aufnahme (4);
- einem oder mehreren Abständen oder Positionen zwischen der Pipettenspitze (2) und einer oder mehreren anderen Pipettenspitzen (2', 2'', 2''').

## Claims

1. Liquid processing system (14) with a pipetting device comprising:
- a pipette tube (1), which is formed at its one end for the detachable receiving of a pipette tip (2) for aspirating or dispensing a liquid, and is operationally connectable at its other end to a pressure generating means; and
- a capacitance measuring unit (6) for measuring a capacitance, in particular an absolute capacitance, of a measuring capacitor, which comprises a first electrode and a second electrode as a counter electrode, wherein the second electrode is part of the liquid processing system (14),
**characterized in that** the pipetting device comprises a detection unit (7) for detecting whether a pipette tip (2) is connected to the one end of the pipette tube (1), and/or for detecting a characteristic feature of the pipette tip (2), which is connected to the one end of the pipette tube (1), wherein the pipette tip (2) forms at least a part of the first electrode when the pipette tip (2) is electrically operationally connected to the pipette tube (1), and
wherein the detection unit (7) is designed such that the detection is performed by means of at least one comparison of a measured value of the capacitance, in particular the absolute capacitance, to one or more reference values, and wherein at least a part of the second electrode is formed by at least one of the following:
- a pipette tip holder (3) having at least one receptacle (4) for receiving the pipette tip (2);
- at least a part of a support (33) for placement of a pipette tip holder (3) having at least one receptacle (4) for receiving the pipette tip (2);
- at least a part of a worktable (5), over which the pipette tube (1) is movable;
- one or more pipette tips (2', 2'', 2''');
- one or more pipette tube holders (13), which are adapted for the attachment of a pipette tube (1).

2. Liquid processing system (14) according to claim 1, wherein the reference values are characteristic for the capacitance, in particular the absolute capacitance, of different pipette tips (2).

3. Liquid processing system (14) according to claim 1 or 2, wherein the reference values are dependent on one or more of the following properties:
- a material of which the pipette tip (2) consists;
- a geometry of the pipette tip (2), in particular a shape of the pipette tip (2), furthermore in particular a diameter and/or a length of the pipette tip (2);
- a material of which the pipette tip holder (3) consists;
- a geometry of the receptacle (4) for receiving the pipette tip (2) in the pipette tip holder (3), in particular a shape of the receptacle (4), furthermore in particular a diameter and/or a length of the receptacle (4);
- a coating (9) of the pipette tip (2), in particular a material of which the coating (9) of the pipette tip (2) consists, furthermore in particular an extension or thickness of the coating (9) of the pipette tip (2);
- a coating (9') of the pipette tip holder (3), in particular of the receptacle (4), in particular a material of which the coating (9') of the pipette tip holder (3) or rather the receptacle (4) consists, furthermore in particular an extension or thickness of the coating (9') of the pipette tip holder (3) or rather the receptacle (4);
- one or more distances or positions between the pipette tip (2) and one or more other pipette tips (2', 2'', 2''').

4. Liquid processing system (14) according to any one of claims 1 to 3, wherein the capacitance measuring unit (6) comprises a capacitance-to-digital converter or a time-to-digital converter.

5. The method for detecting a pipette tip (2) on a pipetting device having a pipette tube (1), which is designed at its one end for the detachable receiving of a pipette tip (2) for aspirating or dispensing a liquid, and is operationally connected at its other end to a pressure generating means, wherein the method comprises the following steps:
- connecting the pipette tip (2) to the one end of the pipette tube (1);
- measuring a value of a capacitance, in particular an absolute capacitance, of a measuring capacitor, which comprises a first electrode and a second electrode as a counter electrode, wherein the pipette tip (2) forms at least a part of the first electrode, preferably a predominant part of the first electrode;
- comparing the measured value of the capacitance, in particular the absolute capacitance, to one or more reference values;
- outputting an item of information in dependence on a result of the comparison, which specifies whether a pipette tip (2) is connected to the pipette tube (1), and/or which specifies a characteristic feature of the pipette tip (2), in particular relating to a design of the pipette tip (2),
wherein at least a part of the second electrode is formed by at least one of the following:
- a pipette tip holder (3) having at least the receptacle (4) for receiving the pipette tip (2);
- at least a part of a support (33) for the placement of a pipette tip holder (3) having at least the receptacle (4) for receiving the pipette tip (2);
- at least a part of a worktable (5), over which the pipette tube (1) is movable;
- one or more pipette tips (2', 2'', 2''');
- one or more pipette tube holders (13), which are adapted for connecting a pipette tube (1).

6. Method according to claim 5, wherein the measurement takes place while the pipette tip (2) is still at least partially located in the receptacle (4), in particular a part of the pipette tip (2) protrudes into the receptacle (4).

7. Method according to claim 5, wherein the measurement takes place after the pipette tip (2) has been completely removed from the receptacle (4), in particular after the pipette tip (2) has been removed from the pipette tip holder (3), and the pipette tip (2) is located above the worktable (5), which then forms a predominant part of the second electrode in comparison to the pipette tip holder (3).

8. Method according to claim 5, wherein the measurement takes place while the pipette tip (2) is still at least partially located adjacent to one or more pipette tube holders (13), in particular is at the same height as these, which then form a predominant part of the second electrode.

9. Method according to any one of claims 5 to 8, further comprising:
- measuring a prior value of the capacitance, in particular the absolute capacitance, of the measuring capacitor before the pipette tip (2) is connected to the end of the pipette tube (1);
- using the prior value as a reference value upon the comparison to the measured value.

10. Method according to claim 5, wherein during at least two movements, comprising the movements a) guiding the pipette tube (1) to the pipette tip (2), b) connecting the pipette tip (2) to the end of the pipette tube (1), c) taking the pipette tip (2) out of the receptacle (4), and d) guiding the pipette tip (2) away from the pipette tip holder (3), a plurality of values of the capacitance, in particular the absolute capacitance, of the measuring capacitor are measured, and a maximum value is ascertained from this plurality of values, which is compared to the one or the multiple reference values.

11. Method according to claim 5, wherein during at least two movements, comprising the movements a) guiding the pipette tube (1) to the pipette tip (2), b) connecting the pipette tip (2) to the end of the pipette tube (1), c) taking the pipette tip (2) out of the receptacle (4), and d) guiding the pipette tip (2) away from the pipette tip holder (3), a plurality of values of the capacitance, in particular the absolute capacitance, of the measuring capacitor are measured, wherein at least a part of this plurality of values forms a time curve of the capacitance, in particular the absolute capacitance, which is compared to one or more time curves consisting of multiple reference values.

12. Method according to any one of claims 5 to 11, wherein the reference values are characteristic for the capacitance, in particular the absolute capacitance, of different pipette tips (2).

13. Method according to any one of claims 5 to 12, wherein the reference values are dependent on one or more of the following characteristics:
- a material of which the pipette tip (2) consists;
- a geometry of the pipette tip (2), in particular a shape of the pipette tip (2), furthermore in particular a diameter and/or a length of the pipette tip (2);
- a material of which the pipette tip holder (3) consists;
- a geometry of the receptacle (4) for receiving the pipette tip (2) in the pipette tip holder (3), in particular a shape of the receptacle (4), furthermore in particular a diameter and/or a length of the receptacle (2);
- a coating (9) of the pipette tip (2), in particular a material of which the coating (9) of the pipette tip (2) consists, furthermore in particular an extension or thickness of the coating (9) of the pipette tip (2);
- a coating (9') of the pipette tip holder (3), in particular the receptacle (4), in particular a material of which the coating (9') of the pipette tip holder (3) or rather the receptacle (4) consists, furthermore in particular an extension or thickness of the coating (9') of the pipette tip holder (3) or rather the receptacle (4);
- one or more distances or positions between the pipette tip (2) and one or more other pipette tips (2', 2'', 2''').

## Revendications

1. Système de traitement de liquide (14) avec un dispositif de pipettage comprenant :
- un tube de pipette (1) qui est réalisé, au niveau d'une extrémité, pour recevoir de façon amovible un embout de pipette (2) pour aspirer et fournir un liquide, et qui, au niveau de l'autre extrémité, peut être amené en liaison active avec un moyen de génération de pression ; et
- une unité de mesure de capacité (6) pour mesurer une capacité, en particulier une capacité absolue, d'un condensateur de mesure, lequel comprend une première électrode et une deuxième électrode comme contre-électrode, la deuxième électrode faisant partie intégrante du système de traitement de liquide (14),
**caractérisé en ce que** le dispositif de pipettage comprend une unité de détection (7) pour détecter si un embout de pipette (2) est raccordé à une extrémité du tube de pipette (1), et/ou pour détecter une caractéristique de l'embout de pipette (2) qui est raccordé à une extrémité du tube de pipette (1),
dans lequel l'embout de pipette (2) forme au moins une partie de la première électrode lorsqu'il est en liaison électrique active avec le tube de pipette (1), et
dans lequel l'unité de détection (7) est conçue de telle sorte que la détection se fait en comparant une valeur mesurée de la capacité, en particulier de la capacité absolue, avec une ou plusieurs valeurs de référence, et dans lequel au moins une partie de la deuxième électrode est formée par au moins l'un des éléments suivants :
- un support d'embout de pipette (3) avec au moins un logement (4) pour recevoir l'embout de pipette (2) ;
- au moins une partie d'un support (33) pour déposer un support d'embout de pipette (3) avec au moins un logement (4) pour recevoir l'embout de pipette (2) ;
- au moins une partie d'une table de travail (5) au-dessus de laquelle le tube de pipette (1) peut se déplacer ;
- un ou plusieurs embouts de pipette (2', 2'', 2''') ;
- un ou plusieurs supports de tube de pipette (13) conçus pour poser un tube de pipette (1).

2. Système de traitement de liquide (14) selon la revendication 1, dans lequel les valeurs de référence pour la capacité, en particulier la capacité absolue, caractérisent différents embouts de pipette (2).

3. Système de traitement de liquide (14) selon la revendication 1 ou 2, dans lequel les valeurs de référence dépendent d'une ou plusieurs des caractéristiques suivantes :
- le matériau dont est composé l'embout de pipette (2) ;
- la géométrie de l'embout de pipette (2), en particulier la forme de l'embout de pipette (2), plus particulièrement le diamètre et/ou la longueur de l'embout de pipette (2) ;
- le matériau dont est composé le support d'embout de pipette (3) ;
- la géométrie du logement (4) destiné à recevoir l'embout de pipette (2) dans le support d'embout de pipette (3), en particulier la forme du logement (4), plus particulièrement le diamètre et/ou la longueur du logement (4) ;
- le revêtement (9) de l'embout de pipette (2), en particulier le matériau dont est composé le revêtement (9) de l'embout de pipette (2), plus particulièrement l'étendue ou l'épaisseur du revêtement (9) de l'embout de pipette (2) ;
- le revêtement (9') du support d'embout de pipette (3), en particulier du logement (4), en particulier le matériau dont est composé le revêtement (9') du support d'embout de pipette (3) ou du logement (4), plus particulièrement l'étendue ou l'épaisseur du revêtement (9') du support d'embout de pipette (3) ou du logement (4) ;
- une ou plusieurs distances ou positions entre l'embout de pipette (2) et un ou plusieurs autres embouts de pipettes (2', 2'', 2''').

4. Système de traitement de liquide (14) selon l'une des revendications 1 à 3, dans lequel l'unité de mesure de capacité (6) comprend un convertisseur capacité-numérique ou un convertisseur temps-numérique.

5. Procédé pour détecter un embout de pipette (2) sur un dispositif de pipettage comprenant un tube de pipette (1) qui est réalisé, au niveau d'une extrémité, pour recevoir de façon amovible un embout de pipette (2) pour aspirer et fournir un liquide, et qui, au niveau de l'autre extrémité, est en liaison active avec un moyen de génération de pression, le procédé comprenant les étapes suivantes :
- raccorder l'embout de pipette (2) à une extrémité du tube de pipette (1) ;
- mesurer une valeur d'une capacité, en particulier d'une capacité absolue, d'un condensateur de mesure qui comprend une première électrode et une deuxième électrode comme contre-électrode, l'embout de pipette (2) formant au moins une partie de la première électrode, de préférence une majeure partie de la première électrode ;
- comparer la valeur mesurée de la capacité, en particulier de la capacité absolue, avec une ou plusieurs valeurs de référence ;
- délivrer une information en fonction du résultat de la comparaison qui indique si un embout de pipette (2) est raccordé au tube de pipette (1) et/ou qui donne une caractéristique de l'embout de pipette (2), en particulier au niveau de la configuration de l'embout de pipette (2),
dans lequel au moins une partie de la deuxième électrode est formée par au moins l'un des éléments suivants :
- un support d'embout de pipette (3) avec au moins le logement (4) pour recevoir l'embout de pipette (2) ;
- au moins une partie du support (33) pour déposer un support d'embout de pipette (3) avec au moins le logement (4) pour recevoir l'embout de pipette (2) ;
- au moins une partie de la table de travail (5) au-dessus de laquelle le tube de pipette (1) peut être déplacé ;
- un ou plusieurs embouts de pipette (2', 2'', 2''') ;
- un ou plusieurs supports d'embout de pipette (13) qui sont réalisés pour poser un tube de pipette (1).

6. Procédé selon la revendication 5, dans lequel la mesure a lieu pendant que l'embout de pipette (2) se trouve encore au moins en partie dans le logement (4), en particulier pendant qu'une partie de l'embout de pipette (2) pénètre à l'intérieur du logement (4).

7. Procédé selon la revendication 5, dans lequel la mesure a lieu après que l'embout de pipette (2) a été complètement retiré du logement (4), en particulier après que l'embout de pipette (2) a été retiré du support d'embout de pipette (3), et lorsque l'embout de pipette (2) se trouve au-dessus de la table de travail (5), laquelle forme alors une partie prépondérante de la deuxième électrode par rapport au support d'embout de pipette (3).

8. Procédé selon la revendication 5, dans lequel la mesure a lieu pendant que l'embout de pipette (2) se trouve au moins en partie à côté d'un ou de plusieurs supports de tube de pipette (13), en particulier à la même hauteur que ces derniers, lesquels forment alors une partie prépondérante de la deuxième électrode.

9. Procédé selon l'une des revendications 5 à 8, consistant en outre à :
- mesurer une valeur préalable de la capacité, en particulier de la capacité absolue, du condensateur de mesure avant que l'embout de pipette (2) soit raccordé à l'extrémité du tube de pipette (1) ;
- utiliser la valeur préalable comme valeur de référence lors de la comparaison avec la valeur mesurée.

10. Procédé selon la revendication 5, dans lequel pendant au moins deux mouvements, comprenant les mouvements a) rapprochement du tube de pipette (1) sur l'embout de pipette (2), b) raccordement de l'embout de pipette (2) avec l'extrémité du tube de pipette (1), c) retrait de l'embout de pipette (2) du logement (4) et d) éloignement de l'embout de pipette (2) du support d'embout de pipette (3), il est mesuré une multitude de valeurs de la capacité, en particulier de la capacité absolue, du condensateur de mesure, et il est déterminé à partir de cette multitude de valeurs une valeur de mesure maximale qui est comparée à une ou plusieurs valeurs de référence.

11. Procédé selon la revendication 5, dans lequel pendant au moins deux mouvements, comprenant les mouvements (a) rapprochement du tube de pipette (1) sur l'embout de pipette (2), b) raccordement de l'embout de pipette (2) avec l'extrémité du tube de pipette (1), c) retrait de l'embout de pipette (2) du logement (4) et d) éloignement de l'embout de pipette (2) du support d'embout de pipette (3), il est mesuré une multitude de valeurs de la capacité, en particulier de la capacité absolue, du condensateur de mesure, au moins une partie de cette multitude de valeurs formant un tracé temporel de la capacité, en particulier de la capacité absolue, qui est ensuite comparé à un ou plusieurs tracés temporels composés de plusieurs valeurs de référence.

12. Procédé selon l'une des revendications 5 à 11, dans lequel les valeurs de référence pour la capacité, en particulier la capacité absolue, caractérisent différents embouts de pipette (2).

13. Procédé selon l'une des revendications 5 à 12, dans lequel les valeurs de référence dépendent d'une ou plusieurs des caractéristiques suivantes :
- le matériau dont est composé l'embout de pipette (2) ;
- la géométrie de l'embout de pipette (2), en particulier la forme de l'embout de pipette (2), plus particulièrement le diamètre et/ou la longueur de l'embout de pipette (2) ;
- le matériau dont est composé le support d'embout de pipette (3) ;
- la géométrie du logement (4) destiné à recevoir l'embout de pipette (2) dans le support d'embout de pipette (3), en particulier la forme du logement (4), plus particulièrement le diamètre et/ou la longueur du logement (4) ;
- le revêtement (9) de l'embout de pipette (2), en particulier le matériau dont est composé le revêtement (9) de l'embout de pipette (2), plus particulièrement l'étendue ou l'épaisseur du revêtement (9) de l'embout de pipette (2) ;
- le revêtement (9') du support d'embout de pipette (3) en particulier du logement (4), en particulier le matériau dont est composé le revêtement (9') du support d'embout de pipette (3) ou du logement (4), plus particulièrement l'étendue ou l'épaisseur du revêtement (9') du support d'embout de pipette (3) ou du logement (4) ;
- une ou plusieurs distances ou positions entre l'embout de pipette (2) et un ou plusieurs autres embouts de pipette (2', 2'', 2''') .
